(19) Europäisches Patentamt
European Patent Office
Office européen des brevets

(11) EP 0 751 180 A1

(12) # EUROPÄISCHE PATENTANMELDUNG

(43) Veröffentlichungstag:
**02.01.1997 Patentblatt 1997/01**

(21) Anmeldenummer: **96810420.8**

(22) Anmeldetag: **21.06.1996**

(51) Int Cl.[6]: **C08K 13/02**
// (C08K13/02, 3:34, 5:56),
(C08K13/02, 3:34, 5:57),
(C08K13/02, 3:34, 5:56, 5:57)

(84) Benannte Vertragsstaaten:
**BE DE DK ES FR GB IT NL SE**

(30) Priorität: **30.06.1995 CH 1932/95**

(71) Anmelder: **Ciba SC Holding AG
4057 Basel (CH)**

(72) Erfinder:
- **Kuhn, Karl Josef, Dr.
64686 Lautertal (DE)**
- **Wehner, Wolfgang, Dr.
64372 Ober-Ramstadt (DE)**
- **Drewes, Rolf, Dr.
64678 Lindenfels (DE)**

(54) **Stabilisierte halogenhaltige Polymere**

(57) Halogenhaltige Polymere oder deren Recyclate werden durch Zugabe von

(b) mindestens einem Zeolith in der Natrium-, Kalium- und/oder Lithium-Form, insbesondere mindestens einen Zeolith der Formel

$$M_2O \cdot Al_2O_3 \cdot x\ SiO_2 \cdot y\ H_2O \qquad (I),$$

worin M Na, K oder Li, x 2 bis 12 und y 1 bis 15 sind, ausgenommen Zeolith A, $Na_{12}Al_{12}Si_{12}O_{48} \cdot 27\ H_2O$ und
Clinoptilolith $Na_6Al_6Si_{30}O_{72} \cdot 2H_2O$,

(c) mindestens einer organischen Zink-, Aluminium- oder Seltenerd-Verbindung, und/oder

(d) mindestens einer Organozinnverbindung, wie in Anspruch 1 näher beschrieben, stabilisiert.

EP 0 751 180 A1

## Beschreibung

Die Erfindung betrifft stabilisierte halogenhaltige Polymere oder deren Recyclate, vorzugsweise Polyvinylchlorid (PVC) oder dessen Recyclate, und eine Stabilisatormischung enthaltend bestimmte Zeolithe, Metallseifen und/oder Organozinnverbindungen und ein Verfahren zur Herstellung von stabilisierten halogenhaltigen Polymeren.

Neben Zinn- und Bleiverbindungen werden zur Stabilisierung von PVC auch Fettsäuresalze (sogenannte Metallseifen) verwandt, wobei es sich üblicherweise bei den Metallen um Barium, Cadmium, Zink, Magnesium, Calcium oder wiederum Blei handelt. Im Hinblick auf die unterschiedlichen Stabilisierungseigenschaften (Anfangsfarbe, Farbhaltung und Langzeitstabilität) wird zur Erreichung einer ausgewogenen Stabilisierung jeweils eine Kombination von zwei verschiedenen Metallseifen eingesetzt, wie beispielsweise Ba/Cd-Seifen. Zur Vermeidung von Barium, Blei oder Cadmium enhaltenden Verbindungen wurden auch Ca/Zn-Seifen vorgeschlagen; vergleiche hierzu beispielsweise "Taschenbuch der Kunststoff-Additive", Herausgeber R. Gächter und H. Müller, (abgekürzt im folgenden als "KA'e G & M") Hanser Verlag, 3. Auflage, 1990, Seiten 308-309 und Kunststoff Handbuch PVC, Band 1 und 2, Beck/Braun, Carl Hanser Verlag, 2. Auflage, 1985/1986.

Weiterhin wird als Costabilisator für PVC unter anderem vorgeschlagen, eine Verbindung aus der Reihe der Zeolithe oder Hydrotalcite zu verwenden; Beispiele finden sich in EP-A-0 062 813, EP-A-0 432 495,US-A-5,216,058 sowie US-A-4,000,100, wo der Einsatz von nicht aktiviertem Zeolith A beschrieben ist.

Man ist weiterhin bestrebt, physiologisch unbedenkliche Stabilisatorsysteme zur Verfügung zu stellen, die gleichzeitig eine hohe Stabilisierung ermöglichen. Insbesondere sind Stabilisatorsysteme, welche Barium, Blei oder Cadmium enthalten, zu vermeiden.

Es wurde nun gefunden, daß bestimmte Zeolithe sich besonders und überraschend gut mit Metallseifen und/oder Organozinnverbindungen so kombinieren lassen, daß einem halogenhaltigen Polymer eine hervorragende Langzeitstabilität bei guter Anfangsfarbe und Farbhaltung verliehen wird. Überraschenderweise weist z.B. erfindungsgemäß stabilisiertes PVC gegenüber herkömmlich stabilisiertem PVC eine deutlich verbesserte Transparenz und Farbhaltung auf.

Die Erfindung betrifft somit Zusammensetzungen enthaltend

(a) ein halogenhaltiges Polymer oder dessen Recyclat;
(b) mindestens einen Zeolith in der Alkali-Form,
bevorzugt in der Natrium-, Kalium- und/oder Lithium-Form,
insbesondere mindestens einen Zeolith der Formel

$$M_2O\cdot Al_2O_3\cdot x\ SiO_2\cdot y\ H_2O \qquad (I),$$

worin M Na, K oder Li, x 2 bis 12 und y 1 bis 15 sind,
bevorzugt $Na_2O\cdot Al_2O_3\cdot(2\text{ bis }5)SiO_2\cdot(3{,}5\text{ bis }10)\ H_2O$ (Zeolith P oder Zeolith MAP bzw. MA-P),
ausgenommen Zeolith A, $Na_{12}Al_{12}Si_{12}O_{48}\cdot 27H_2O$,
und Clinoptilolith $Na_6Al_6Si_{30}O_{72}\cdot 2\ H_2O$,
(c) mindestens eine organische Zink-, Aluminium- oder Seltenerd-Verbindung, bevorzugt mindestens eine Metallseife, und/oder
(d) mindestens eine Organozinnverbindung einer der Formeln I bis VII

$$[R^1]_iSn[-Q-R^2]_{4-i} \qquad (I)$$

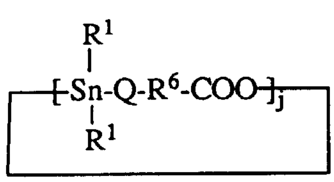

(II)

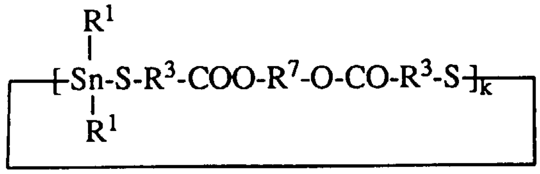 (III)

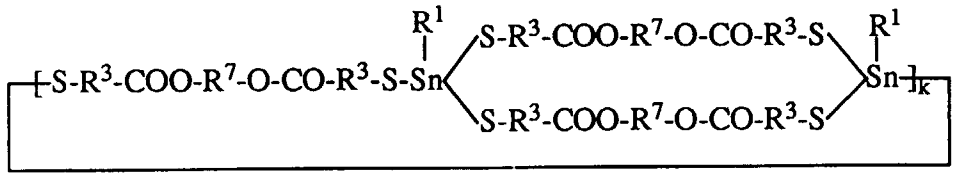 (IV)

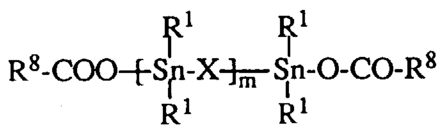 , (V)

$R_pSnS_q$ (VI)

bzw. $[R_pSnS_q]_r$ (VII)

worin

R und
$R^1$ unabhängig voneinander $C_1$-$C_{12}$-Alkyl oder $C_3$-$C_{11}$-Alkoxycarbonylethyl bedeuten,
Q die Bedeutung von -S- oder -O-CO- hat und,
$R^2$, wenn Q für -S- steht, $C_8$-$C_{18}$-Alkyl oder ein Rest -$R^3$-COO-$R^4$ oder -$R^3$-O-CO-$R^4$ ist,
$R^2$, wenn Q für -O-CO- steht, $C_1$-$C_{18}$-Alkyl, $C_2$-$C_{18}$-Alkenyl, Phenyl, durch $C_1$-$C_4$-Alkyl substituiertes Phenyl, oder ein Rest -CH=CH-COO-$R^5$ ist,
$R^3$ Methylen, Ethylen oder o-Phenylen,
$R^4$ $C_5$-$C_{18}$-Alkyl,
$R^5$ $C_1$-$C_{18}$-Alkyl, $C_5$-$C_7$-Cycloalkyl oder Benzyl bedeuten,
$R^6$, wenn Q für -S- steht, Methylen, Ethylen oder o-Phenylen,
$R^6$, wenn Q für -O-CO- steht, $C_1$-$C_8$-Alkylen, o-Phenylen oder eine Gruppe -CH=CH-bedeutet,
$R^7$ $C_2$-$C_4$-Alkylen oder durch -O- unterbrochenes $C_4$-$C_8$-Alkylen darstellt,
$R^8$ $C_1$-$C_{18}$-Alkyl, $C_2$-$C_{18}$-Alkenyl, Phenyl, durch $C_1$-$C_4$-Alkyl substituiertes Phenyl, oder ein Rest -CH=CH-COO-$R^5$ ist,
X unabhängig voneinander - die Bedeutung -O- oder -O-CO-$R^9$-COO- hat,
$R^9$ $C_1$-$C_8$-Alkylen, o-Phenylen oder eine Gruppe -CH=CH- bedeutet,
p 1 oder 2, q [(4-p)/2] und r > 1 sind,
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen.

Die oben und in der gesamten Beschreibung sowie in den Patentansprüchen verwandte abgekürzte Schreibweise -COO- bedeutet die Gruppierung

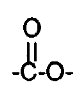 ,

die Schreibweise -O-CO- die Gruppierung

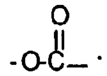

$R^1$, $R^2$, $R^4$, $R^5$ und $R^8$ als Alkyl sind im Rahmen der jeweils angegebenen Anzahl der C-Atome z.B. Methyl, Ethyl, Propyl, Isopropyl, Butyl, Isobutyl, tert-Butyl, Pentyl, Hexyl, Heptyl, Octyl, Isooctyl, Nonyl, Decyl, Undecyl, Dodecyl, Tridecyl, Tetradecyl, Pentadecyl, Hexadecyl, Heptadecyl oder Octadecyl.

Isooctyl bedeutet die Alkylreste des aus dem Oxoprozess stammenden Gemisches von primären verzweigten Alkoholen $R'CH_2OH$, wobei R' eine verzweigte Heptylgruppe ist (Merck Index 10th.ed., 5041).

R als Alkyl bedeutet bevorzugt n- und iso-Alkylreste, besonders bevorzugt Methyl, Ethyl und n-Butyl.

$R^1$ hat als Alkyl bevorzugt die Bedeutung von Methyl, Butyl oder Octyl.

$R^1$ als $C_3$-$C_{11}$-Alkoxycarbonylethyl bedeutet $C_1$-$C_8$-Alkyl-O-CO-$CH_2$-$CH_2$-.

$R^2$ und $R^8$ als $C_2$-$C_{18}$-Alkenyl bedeuten u.a. Ethenyl (Vinyl), Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Heptadec-8-enyl, n-Octadec-2-enyl, n-Octadec-4-enyl.

Die Bedeutung von $R^2$ und $R^8$ als mit $C_1$-$C_4$-Alkyl substituiertes Phenyl umfaßt beispielsweise Methylphenyl, Dimethylphenyl, Trimethylphenyl, Ethylphenyl, Diethylphenyl, Isopropylphenyl, tert-Butylphenyl.

$R^2$, $R^6$, $R^8$ und $R^9$ als -CH=CH-COO-$R^5$ beziehungsweise -CH=CH- leiten sich von Maleinsäure oder Fumarsäure ab, vorzugsweise von Maleinsäure.

$R^5$ als $C_5$-$C_7$-Cycloalkyl ist Cyclopentyl, Cyclohexyl oder Cycloheptyl, vorzugsweise Cyclopentyl oder Cyclohexyl, vor allem Cyclohexyl.

$R^6$ und $R^7$ als Alkylen bedeuten einen zweiwertigen Alkylrest; im Rahmen der angegebenen Kettenlängen sind $R^6$ und $R^7$ z.B. Methylen, Ethylen, $-CH(CH_3)-CH_2-$, $-(CH_2)_3-$, $-(CH_2)_4-$, $-(CH_2)_6-$, $-(CH_2)_8-$, $-CH_2-CH(C_2H_5)-(CH_2)_4-$, $-CH_2-C(CH_3)_2-CH_2-$; bevorzugt sind geradkettige Reste. $R^7$ bedeutet als durch -O- unterbrochenes $C_4$-$C_8$-Alkylen beispielsweise $-(CH_2)_2-O-(CH_2)_2-$, $-(CH_2)_3-O-(CH_2)_3$, $-(CH_2)_2-O-(CH_2)_4-$ oder $-(CH_2)_4-O-(CH_2)_4-$, insbesondere $-(CH_2)_2-O-(CH_2)_2-$. Die Einheit $(O-CH_2-CH_2)$ kann auch mehrfach vorhanden sein. Beispiele für solche Reste sind $(CH_2)_2-(O-CH_2CH_2-)_2-$ und $-(CH_2)_2-(O-CH_2CH_2-)_3$.

Komponente (a)

Als halogenhaltige Polymere oder deren Recyclate sind chlorhaltige bevorzugt, beispielsweise: Polymere des Vinylchlorids und Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Emulsionspolymere.

Im Rahmen dieser Erfindung sind unter PVC auch Copolymerisate oder Pfropfpolymerisate von PVC mit polymerisierbaren Verbindungen wie Acrylnitril, Acrylaten und Methacrylaten, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin sind im Rahmen dieser Erfindung unter (a) auch insbesondere Recyclate halogenhaltiger Polymere zu verstehen, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe oder andere Polymere, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren, Initiatorreste oder auch Wasserspuren.

Komponente (b)

Erfindungsgemäß verwendbare Zeolithe, die unter die Formel I fallen, sind z.B. aus "Atlas of Zeolite Structure Types", W.M. Meier und D.H. Olson, Verlag Butterworths, 3. Auflage 1992, bekannt. In Formel I sind M vorzugsweise Na oder K, x 1 bis 10 und y 2 bis 12.

Die bevorzugten Zeolithe weisen einen durchschnittlichen wirksamen Porendurchmesser von 3 bis 9 Å auf und können nach bekannten Methoden hergestellt werden.

Solche Methoden sind z.B. in US-4,503,023; US-A-4,000,100, US-A-3,130,007, US-A-3,008,803, EP-A-400961 EP-A-384070, DE-A-26 20 293, GB-A-1,082,131, US-A-2,950,952; US-A-2,882,244, G.H. Kühl, The American Mineralogist, 54, 1607-12 (1969) sowie in L.Puppe, Chemie in unserer Zeit 1986, 117 ff. beschrieben.

Weiterhin sind Zeolithe der Formel I mit blättrigem oder würfelförmigem Kristallhabitus bevorzugt.

Bevorzugt sind auch kristalline Natriumalumosilikate, deren Teilchengröße wenigstens weitaus überwiegend im Bereich von <10 µ liegt

Beispiele für in Frage kommende Zeolithe sind:

$$Na_8Al_8Si_{40}O_{96} \cdot 24\ H_2O \text{ [Mordenit]}$$

$$Na_6Al_6Si_{30}O_{72} \cdot 24\ H_2O,$$

$$Na_8Al_8Si_{40}O_{96} \cdot 24\ H_2O,$$

$$Na_{16}Al_{16}Si_{24}O_{80} \cdot 16\ H_2O,$$

$$Na_{16}Al_{16}Si_{32}O_{96} \cdot 16\ H_2O,$$

$$Na_{56}Al_{56}Si_{136}O_{384} \cdot 250\ H_2O, \text{ [Zeolith Y]}$$

$$Na_{86}Al_{86}Si_{106}O_{384} \cdot 264\ H_2O \text{ [Zeolith X]}$$

$$Na_2O \cdot Al_2O_3 \cdot (2 \text{ bis } 5)\ SiO_2 \cdot (3{,}5 \text{ bis } 10)\ H_2O \text{ [Zeolith P]}$$

$$Na_2O \cdot Al_2O_3 \cdot 2\ SiO_2 \cdot (3.5\text{-}10) H_2O \text{ (Zeolith MAP)}$$

oder die durch teilweisen bzw. vollständigen Austausch der Na-Atome durch Li-, K- oder H-Atome darstellbaren Zeolithe wie

$$(Li,Na,K,H)_{10}Al_{10}Si_{22}O_{64} \cdot 20\ H_2O.$$

$$K_9Na_3[(AlO_2)_{12}(SiO_2)_{12}] \cdot 27\ H_2O$$

$K_4Al_4Si_4O_{16}\cdot 6H_2O$ [Zeolith K-F]

$Na_8Al_8Si_{40}O_{96}$.24 $H_2O$ Zeolith D, wie in Barrer et al.. J. Chem. Soc. **1952**, 1561-71, und in US 2,950,952 beschrieben;

Ferner kommen folgende Zeolithe in Frage (Sofern diese andere Kationen als $Li^+$, $Na^+$ und $K^+$ enhalten können, sind hier die durch konventionellen Ionenaustausch erhältlichen Na, K, und/oder Li-Formen gemeint):

K-Offretit, wie in EP-A-400,961 beschrieben;
Zeolith R, wie in GB 841,812 beschrieben;
Zeolith LZ-217, wie in US 4,503,023 beschrieben;
Ca-freier Zeolith LZ-218, wie in US 4,333,859 beschrieben;
Zeolith T, Zeolith LZ-220, wie in US 4,503,023 beschrieben;
$Na_3K_6Al_9Si_{27}O_{72}$.21$H_2O$ [Zeolith L];
Zeolith LZ-211, wie in US 4,503,023 beschrieben;
Zeolith LZ-212, wie in US 4,503,023 beschrieben;
Zeolith O, Zeolith LZ-217, wie in US 4,503,023 beschrieben;
Zeolith LZ-219, wie in US 4,503,023 beschrieben;
Zeolith Rho, Zeolith LZ-214, wie in US 4,503,023 beschrieben;
Zeolith ZK-19, wie in Am. Mineral. **54** 1607 (1969) beschrieben;
Zeolith W (K-M), wie in Barrer et al. J. Chem. Soc. **1956**, 2882, beschrieben;
$Na_{30}Al_{30}Si_{66}O_{192}$. 98 $H_2O$ [Zeolith ZK-5, Zeolith Q]

Besonders bevorzugt werden Zeolith P-Typen der Formel I verwandt, worin x 2 bis 5 und y 3.5 bis 10 sind, ganz besonders bevorzugt Zeolith MAP der Formel I, worin x 2 und y 3.5 bis 10 sind. Insbesondere handelt es sich um Zeolith Na-P, d.h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (R.M.Barrer, B.M.Munday, J. Chem.Soc. A **1971**, 2909-14). In der ebengenannten Literatur ist auch die Herstellung von Zeolith P-1 und P-2 beschrieben. Zeolith P-3 ist danach sehr selten und daher kaum von praktischem Interesse. Die Struktur des Zeolithen P-1 entspricht der aus dem obengenannten Atlas of Zeolite Structures bekannten Gismonditstruktur. In neuerer Literatur (EP-A-384 070) wird zwischen kubischem (Zeolith B oder $P_c$) und tetragonalem (Zeolith $P_1$) Zeolithen vom P-Typ unterschieden. Dort werden auch neuere Zeolithen des P-Typs mit Si:Al Verhältnissen unter 1,07:1 1 genannt. Hierbei handelt es sich um Zeolithe mit der Bezeichnung MAP oder MA-P für "Maximum Aluminium P". Je nach Herstellungsverfahren kann Zeolith P geringe Anteile anderer Zeolithe enthalten. Sehr reiner Zeolith P ist in WO 94/26662 beschrieben worden.

Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.

Die Zeolithe können in Mengen von beispielsweise 0,1 bis 20, zweckrnäßig 0,1 bis 10 und insbesondere 0,1 bis 5 Gew.-Teilen, bezogen auf 100 Gew.-Teile PVC, angewandt werden.

Komponente (c), Metallseifen

Hierbei handelt es sich in diesem Zusammenhang um organische Zink-, Magnesium, Aluminium oder Lanthanoidenverbindungen aus der Reihe der aliphatischen gesättigten $C_2$-$C_{22}$-Carboxylate, der aliphatischen ungesättigten $C_3$-$C_{22}$-Carboxylate, der aliphatischen $C_2$-$C_{22}$-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder $C_1$-$C_{16}$-alkylsubstituierten Phenylcarboxylate, der unsubstituierten, mit wenigstens einer OH-Gruppe substituierten und/oder $C_1$-$C_{16}$-alkylsubstituierten Naphthylcarboxylate, der Phenyl-$C_1$-$C_{16}$-alkylcarboxylate, der Naphthyl-$C_1$-$C_{16}$-alkylcarboxylate oder der gegebenenfalls mit $C_1$-$C_{12}$-Alkyl substituierten Phenolate.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure,

Salicylsäure, p-tert-Octylsalicylsäure, und Sorbinsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Milchsäure, Malonsäure, Maleinsäure, Weinsäure, Oxalsäure, Salicylsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie Zn-Salze der 1-fach und 2-fach veresterten Phosphorsäure oder der 1-fach veresterten phosphorigen Säure, wie in JP 3,275,570 beschrieben; sowie Harz-Säuren (Rosin Acids wie Abietinsäure) und ferner sog. überbasische (overbased) Zink-carboxylate.

Bevorzugt sind Zusammensetzungen, wie beschrieben, enthaltend als (c) eine organische Zinkverbindung, insbesondere ein organisches Zinkcarboxylat einer Carbonsäure mit 7 bis 25 C-Atomen (Zinkseifen), wie beispielsweise Benzoate oder Alkanoate, bevorzugt $C_8$-Alkanoate, Stearat, Oleat, Laurat, Palmitat, Behenat, Versatat, Hydroxystearate, Dihydroxystearate, p-tert-Butylbenzoat, oder (Iso)octanoat. Besonders bevorzugt sind Stearat, Oleat, Versatat, Benzoat, p-tert-Butylbenzoat und 2-Ethylhexanoat.

Neben den genannten Zink-Verbindungen kommen als Komponente (c) auch organische Aluminium-Verbindungen in Frage, für welche die oben für die Zink-Verbindungen gemachten Angaben gelten. Zu den verwendbaren und bevorzugten Aluminium-Verbindungen finden sich weitere Erläuterungen in US 4,060,512.

Neben den genannten Zink-Verbindungen kommen als Komponente (c) auch organische Seltenerd-Verbindungen in Frage, für welche die oben für die Zink-Verbindungen gemachten Angaben gelten. Unter dem Begriff Seltenerd-Verbindung sind hier vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023.

Gegebenenfalls kann ein Gemisch von Zink-, Aluminium-, Lanthan- oder Lanthanoid-Verbindung unterschiedlicher Struktur eingesetzt werden. Auch können organische Zink-, Aluminium-, Lanthan- oder Lanthanoid-Verbindungen auf eine Alumosalz-Verbindung der Formel (I) gecoatet sein; siehe hierzu auch DE-A-40 31 818.

Die beschriebenen Metallseifen bzw. deren Mischungen können in Mengen von beispielsweise 0,001 bis 10, zweckmäßig 0,01 bis 5, bevorzugt 0,01 bis 3 Gew.-Teilen, bezogen auf 100 Gew.-Teile halogenhaltiges Polymer, angewandt werden.

Komponente (d), Organozinnverbindungen

Die Organozinnverbindungen der Formeln I bis VII sind bekannt (Siehe z.B. die eingangs genannten Literaturstellen sowie US 5,021,491 und die dort referierten: US 2,731,482, US,2,731,484, US 2,713,585, US 2,648,650, US 3,507,827). Insbesondere kann es sich um Carboxylate, Mercaptide und Sulfide handeln.

- Typische Mercaptide sind: Methylzinntris(alkylthioglykolat) oder -(alkylthiopropionat), n-Butylzinn-tris(alkylthioglykolat), n-Butoxycarbonylethylzinn-tris(alkylthioglykolat, Dimethylzinn-bis(alkylthioglykolat) oder -(alkylthiopropionat); Di-n-butylzinn-bis(alkylthioglykolat) oder -(alkylthiopropionat); Bis-n-butoxycarbonylethyl)zinn(alkylthioglykolat) sowie n-Octylzinn-tris(isooctylthioglykolat).
- Typische Sulfide der Formeln VI und VII sind

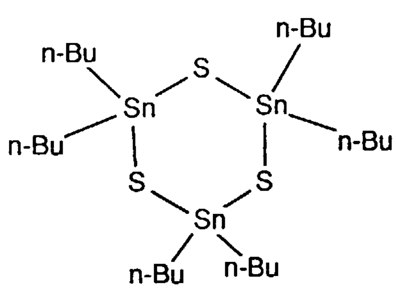

und

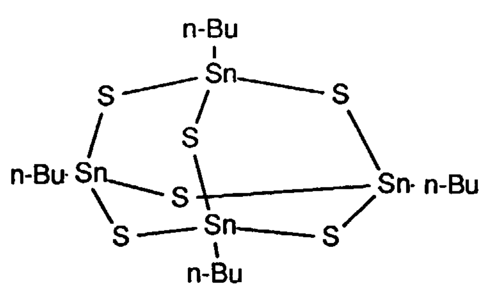

.

- Typische Carboxylate sind Di-n-butylzinn-bis(methylmaleat), Di-n-butylzinn-bis-butylmaleat und polymeres Di-n-butylzinnmaleat. Auch bei den Carboxylaten kann es sich um Gemische handeln, wie z.B. das Gemisch bestehend aus 40 Gew.-% der Verbindung

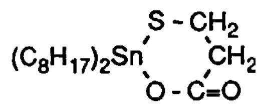

und 60 Gew.-% der Verbindung

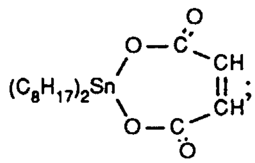

oder das Gemisch bestehend aus 66,7 Gew.-% der Verbindung

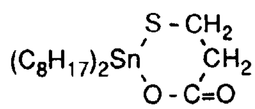

und 33,3 Gew.-% der Verbindung

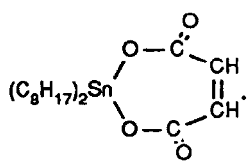

Gemeinsam mit den Verbindungen der Komponente (d) der Formeln I bis VII können in den erfindungsgemäßen Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch die erfindungsgemäßen Zusammensetzungen, welche neben den oben beschriebenen Organozinnverbindungen der Komponente (d) und deren Komproportionierungsprodukten keine weiteren Zinnstabilisatoren enthalten.

Aus der Chemie der Organozinnstabilisatoren weiß man, daß diese im stabilisierten Substrat oft nicht mehr in derselben Form vorliegen, wie sie zugegeben wurden. Es entstehen gewöhnlich Reaktions-(Komproportionierungs-)produkte. Die Erfindung umfaßt selbstverständlich auch Zusammensetzungen, die solche aus den Verbindungen der Komponente (d), entsprechend den Formeln I bis VII, entstandenen Produkte enthalten.

Die erfindungsgemäßen Zusammensetzungen enthalten als Komponente (d) vorzugsweise ein Gemisch von Verbindungen. Zusammensetzungen, welche als Komponente (d) nur eine Verbindung enthalten, sind jedoch auch Gegenstand der Erfindung und weisen die gleichen vorteilhaften Eigenschaften auf.

Enthalten die erfindungsgemäßen Zusammensetzungen als Verbindungen der Komponente (d) solche der Formeln I bis V, so sind diejenigen bevorzugt, worin

$R^1$ $C_1$-$C_{12}$-Alkyl bedeutet,
$R^2$, wenn Q für -S- steht, $C_8$-$C_{18}$-Alkyl oder ein Rest -$R^3$-COO-$R^4$ ist,
$R^2$, wenn Q für -O-CO- steht, $C_7$-$C_{18}$-Alkyl, $C_8$-$C_{18}$-Alkenyl, Phenyl, oder ein Rest -CH=CH-COO-$R^5$ ist,
$R^3$ Methylen, Ethylen oder o-Phenylen,
$R^4$ $C_5$-$C_{18}$-Alkyl,
$R^5$ $C_1$-$C_{18}$-Alkyl oder $C_5$-$C_7$-Cycloalkyl bedeutet,
$R^6$, wenn Q für -S- steht, Methylen, Ethylen oder o-Phenylen,
$R^6$, wenn Q für -O-CO- steht, $C_1$-$C_4$-Alkylen, o-Phenylen oder eine Gruppe -CH=CH-bedeutet,
$R^7$ $C_2$-$C_4$-Alkylen oder durch -O- unterbrochenes $C_4$-$C_8$-Alkylen darstellt,
$R^8$ $C_1$-$C_{18}$-Alkyl, $C_2$-$C_{18}$-Alkcnyl, Phenyl, oder ein Rest -CH=CH-COO-$R^5$ ist,

$R^9$ Butylen, o-Phenylen oder eine Gruppe -CH=CH- bedeutet
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen.

Besonders bevorzugt bedeuten in den Verbindungen der Formeln I bis V

$R^1$ $C_3$-$C_9$-Alkyl,
$R^2$, wenn Q für -S- steht, einen Rest -$R^3$-COO-$R^4$,
$R^2$, wenn Q für -O-CO- steht, $C_7$-$C_{11}$-Alkyl oder einen Rest -CH=CH-COO-$R^5$,
$R^3$ Methylen oder Ethylen,
$R^4$ $C_8$-$C_{18}$-Alkyl,
$R^5$ $C_1$-$C_8$-Alkyl oder Cyclohexyl,
$R^6$, wenn Q für -S- steht, Methylen oder Ethylen,
$R^6$, wenn Q für -O-CO- steht, eine Gruppe -CH=CH-,
$R^7$ -$C_2H_4$-,
$R^8$ $C_8$-$C_{12}$-ASky- oder einen Rest -CH=CH-COO-$R^5$,
$R^9$ eine Gruppe -CH=CH-,
i die Zahl 1 oder 2, j eine Zahl aus dem Bereich von 1 bis 6, k eine Zahl aus dem Bereich von 1 bis 3 und m eine Zahl aus dem Bereich von 1 bis 4.

Die Substituenten an den genannten Gruppierungen -CH=CH- sind besonders bevorzugt cis-ständig (Z-konfiguriert) und leiten sich in den Verbindungen von der Maleinsäure ab.

Weiterhin besonders bevorzugt sind Zusammensetzungen, die als Komponente (d) mindestens eine Verbindung der Formel I oder III enthalten, worin
$R^1$ Butyl oder Octyl, $R^3$ -$CH_2$- , $R^7$ -$C_2H_4$- sind, im Fall Q = S: $R^2$ für -$CH_2$-COO-$R^4$ steht und $R^4$ $C_8$-$C_{12}$-Alkyl ist, sowie im Fall Q = O-CO: $R^2$ für -CH=CH-COO-$R^5$ und $R^5$ für $C_1$-$C_{18}$-Alkyl stehen.

Die Zusammensetzungen enthalten vorzugsweise keine Blei- oder Cadmiumverbindungen.

Die Zusammensetzungen können je nach Verwendungszweck weitere Zusätze und Stabilisatoren wie Kalium, Natrium, Calcium, Magnesium und Bariumseifen enthalten, sowie ferner unter anderem Weichmacher, Epoxidverbindungen, Perchlorate und Gleitmittel. Geeignete Costabilisatoren sind z.B. K, Na, Ca, Mg oder Ba-Seifen der oben unter "Metallseifen" erwähnten organischen Säuren.

Geeignete Weichmacher

Als organische Weichmacher kommen beispielsweise solche aus den folgenden Gruppen in Betracht:

A) Phthalate (Phthalsäureester)
Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat. Gebräuchlich sind die Abkürzungen DOP (Dioctylphthalat, Di-2-ethylhexyl-phthalat), DINP (Diisononylphthalat), DIDP (Diisodecylphthalat).

B) Ester aliphatischer Dicarbonsäuren, insbesondere Ester von Adipin-, Azelain- und Sebazinsäure
Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Ester von Tricarbonsäuren, z.B. Citronensäureester, besonders Trimellithsäureester wie beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen, insbesondere aus $C_6$-$C_{12}$-Alkanolgemischen.. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).

D) Epoxidweichmacher
Hierfür kommen neben synthetischen Verbindungen epoxidierte Öle und deren Ester aus natürlichen Quellen in Fragc, besonders epoxidierte pflanzliche oder tierische Öle wie beispielsweise
Palmkernöl, Palmöl, Olivenöl, Rüböl, Rapsöl, Lein(samen)öl, Erdnußöl, Sojabohnenöl, Baumwollöl, Sonnenblumenöl, Kürbiskernöl, Kokosnußöl, Maisöl, Rizinusöl, Baumnußöl Fischöl, (Rinder)Talg und Mischungen davon sowie deren Ester.
Weitere Beispiele sind epoxidiertes Polybutadien, Methylbutyl- oder 2-Ethylhexylepoxystearat, Tris(epoxypropyl) isocyanurat, 3-(2-Phenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.
Häufig verwendet man epoxidiertes Sojabohnen-, Rizinus- oder Leinsamenöl oder epoxidiertes Butyloleat, wie z.B. Irgaplast® 38, 39 und 392.

E) Polymerweichmacher
Eine Definition dieser Weichmacher und Beispiele für solche sind in "Plastics Additives", Herausgeber R. Gächter und H. Müller, Hanser Verlag, 1990, Seite 393, Kapitel 5.9.6, sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie $C_7$-$C_9$-Alkanol- und $C_9$-$C_{11}$-Alkanolgemische. Besonders vorteilhaft sind Polyesterweichmacher aus den genannten Dicarbonsäuren und monofunktionellen Alkoholen.

F) Phosphorsäureester
Eine Definition dieser Ester ist im vorstehend genannten Handbuch "Plastics Additives" auf Seite 390, Kapitel 5.9.5 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat Bevorzugt sind Tri-2-ethylhexyl-phosphat sowie ®Reofos 50 und 95.

G) Chlorierte Kohlenwasserstoffe (Clorparaffine)

H) Kohlenwasserstoffe (Paraffine)

I) Monoester, z.B. Butyloleat, Phenoxyethyloleat, Tetrahydrofurfuryloleat, Glycerinmonooleat und -stearat sowie Alkylsulfonsäureester.

J) Glykolester, z.B. Diglykolbenzoate.

Definitionen und Beispiele für Weichmacher der Gruppen G) bis J) sind den folgenden Handbüchern zu entnehmen:

"Plastics Additives", Herausgeber R. Gächter und H. Müller, Hanser Verlag, 1990, Seite 284, Kapitel 5.9.14.2 (Gruppe G)), und Kapitel 5.9.14.1 (Gruppe H)).

"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis G), insbesondere A) bis F), vor allem die in diesen Gruppen als bevorzugt herausgestellten Weichmacher.

Im allgemeinen sind von den Weichmachern der Gruppen A), B) C)und E) 5 bis 120, besonders 10 bis 100 Teile,
von denen der Gruppe D) 0,5 bis 30, besonders 0,5 bis 20 Teile,
von denen der Gruppe F) bzw. G) 1 bis 100, besonders 2 bis 80 Teile vorhanden. Es können auch Mischungen unterschiedlicher Weichmacher verwandt werden.

Die Weichmacher können dabei insgesamt in Mengen von beispielsweise 5 bis 200, zweckmäßig 10 bis 100 und insbesondere 10 bis 70 Gew.-Teilen, bezogen auf 100 Gew.-Teile PVC, angewandt werden.

Aus Weich-PVC können z.B. Kabel- und Drahtummantelungen, Dachfolien, Dekorationsfolien, Schaumstoffe, Agrarfolien, Bürofolien, Kraftfahrzeug-Folien (auch Polyurethan-hinterschäumte), Schläuche, Dichtungsprofile, (geschäumte) Vinyl-Tapeten, Fußbodenbeläge und dergleichen mehr hergestellt werden.

Epoxidverbindungen

Die im Rahmen der Erfindung verwendbaren Epoxidverbindungen können end- oder mittelständig sein. Die endständigen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten mindestens einen Epoxidrest der Formel

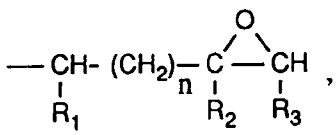

worin $R_1$ und $R_2$ beide Wasserstoff sind, $R_2$ Wasserstoff oder Methyl und n = 0 ist oder worin $R_1$ und $R_3$ zusammen $-CH_2-CH_2-$ oder $-CH_2-CH_2-CH_2-$ bedeuten, $R_2$ dann Wasserstoff und n = 0 oder 1 ist und dieser Epoxidrest direkt an Kohlenstoff, Sauerstoff-, Stickstoff- oder Schwefelatome gebunden ist.

Beispielhaft für Epoxidverbindungen sind zu erwähnen:

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmäßig in der Gegenwart von Basen.

Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwandt werden.

Weitere im Rahmen dieser Erfindung verwendbare Epoxidverbindungen finden sich in der EP 0 506 617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.

Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-Epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit

Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N'"-Tetraglycidylderivate von Cycloalkylenharnstoffen, wie Ethylenharnstoff oder 1,3-Propylenharnstoff, und N,N-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel I, worin $R_1$ und $R_3$ zusammen $-CH_2-CH_2-$ bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel I, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790;

b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;

c) flüssige Bisphenol-F-diglycidylether wie Araldit®GY 281, Araldit®PY 302, Araldit®PY 306;

d)feste Polyglycidylether von Tetraphenylethan wie CG Epoxy Resin®0163;

e) feste und flüssige Polyglycidylether von Phenolformaldehyd Novolak wie EPN 1138, EPN 1139, GY 1180, PY 307;

f) feste und flüssige Polyglycidylether von o-Cresolformaldehyd Novolak wie ECN 1235, ECN 1273, ECN 1280, ECN 1299;

g) flüssige Glycidylether von Alkoholen wie Shell® Glycidylether 162, Araldit®DY 0390, Araldit®DY 0391;

h)flüssige Glycidylether von Carbonsäuren wie Shell®Cardura E Terephthalsäureester, Trimellithsäureester, Araldit®PY 284;

i) feste heterocyclische Epoxidharze (Triglycidylisocyanurat) wie Araldit® PT 810;

j) flüssige cycloaliphatische Epoxidharze wie Araldit®CY 179;

k) flüssige N,N,O-Triglycidylether von p-Aminophenol wie Araldit®MY 0510;

l) Tetraglycidyl-4-4'-methylenbenzamin oder N,N,N'N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis- (ortho/para-hydroxyphenyl)-methan (Bisphenol F).

Die Epoxidverbindungen können in Mengen von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Perchlorate

Die Perchlorate (bzw. Perchlorsäure) entsprechen der Formel $M(ClO_4)_n$ wobei $M^+$ für $H^+$, $NH_4^+$, $Na^+$, $K^+$, $Mg^{2+}$, $Ca^{2+}$, $Ba^{2+}$ $Zn^{2+}$ oder $Al^{3+}$ steht. Der Index n ist entsprechend der Wertigkeit von M 1, 2 oder 3.

Die Perchlorsäure oder das jeweilige Perchlorat können dabei in verschiedenen gängigen Darreichungsformen eingesetzt werden; z.B als Salz oder wäßrige Lösung, auch aufgezogen auf ein Trägermaterial wie PVC, Ca-Silikat, Zeolithe oder Hydrotalcite, oder eingebunden durch chemische Reaktion in einen Hydrotalcit oder gelöst in flüssigen Basiskomponenten, wie z.B. Butylcarbitol oder Polypropylenglykol.

Sie können in Mengen von beispielsweise 0,001 bis 5, zweckmäßig 0,01 bis 3, besonders bevorzugt 0,01 bis 2,0 Gew.-Teilen, bezogen auf 100 Gew.-Teile PVC, angewandt werden.

Das erfindungsgemäß stabilisierte halogenhaltige Polymer kann weitere Additive enthalten. Es handelt sich beispielsweise um Füllstoffe und Verstärkungsmittel (wie beispielsweise Calciumcarbonat, Silikate, Glasfasern, Talk, Kaolin, Kreide, Glimmer, Metalloxide und -hydroxide, Ruß oder Graphit), Antioxidantien, Polyole, Dawsonite, Hydrotalcite, organische Phosphite, 1,3-Diketoverbindungen, mono- oligo- oder polymere Dihydropyridine, α-Phenylindol, Pyrrole, β-Naphthol, Hydroxydiphenylamine, sterisch gehinderte Amine (HALS), Lichtschutzmittel, UV-Absorber, Gleitmittel, Fettsäureester, Paraffine, Treibmittel, optische Aufheller, Pigmente, Flammschutzmittel, Antistatika, β-Aminocrotonate (z.B. wie in EP 0 465 405, S. 6, Z. 9-14 erwähnt), Phosphate, Thiophosphate, Gelierhilfen, peroxidzerstörende Verbindungen, Modifikatoren und weitere Komplexbildner für Lewis-Säuren.

Füllstoffe

Als Füllstoffe werden z.B. Kreide, Kaolin, China-Clay, Talk, Silikate, Glasfasern, Glaskugeln, Holzmehl, Glimmer, Metalloxide, oder -hydroxide, Ruß, Graphit, Gesteinsmehl, Schwerspat verwandt Bevorzugt sind Talk und Kreide.

Die Füllstoffe können in Mengen von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

β-Diketone

Verwendbare 1,3-Dicarbonylverbindungen können lineare oder cyclische Dicarbonylverbindungen sein. Bevorzugt werden Dicarbonylverbindungen der Formel

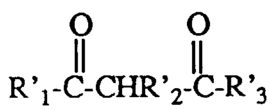

verwandt,
worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_5$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe -$R_5$-S-$R_6$ oder -$R_5$-O-$R_6$ bedeutet, $R'_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe -CO-$R_4$ bedeutet, $R'_3$ eine der für $R'_1$ gegebenen Bedeutungen hat oder $C_1$-$C_{18}$-Alkoxy bedeutet, $R_4$ $C_1$-$C_4$-Alkyl oder Phenyl bedeutet,

$R_5$ $C_1$-$C_{10}$-Alkylen bedeutet und $R_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone der EP-A-346 279 und die Oxa- und Thia-diketone der EP-A-307 358 ebenso wie die auf Isocyanursäure basierenden beta-Ketoester der US-A-4,339,383.

$R'_1$ und $R'_3$ als Alkyl können insbesondere $C_1$-$C_{18}$-Alkyl sein, wie z.B. Methyl, Ethyl, n-Propyl, Isopropyl, n-Butyl, tert- Butyl, Pentyl, Hexyl, Heptyl, Octyl, Decyl, Dodecyl oder Octadecyl.

$R'_1$ und $R'_3$ als Hydroxyalkyl stellen insbesondere eine Gruppe $-(CH_2)_n$-OH dar, worin n 5, 6 oder 7 ist.

$R'_1$ und $R'_3$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert-Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Cycloalkyl oder Alkyl-cycloalkyl sind insbesondere Cyclohexyl oder Methylcyclohexyl.

$R'_2$ als Alkyl kann insbesondere $C_1$-$C_4$-Alkyl sein. $R'_2$ als $C_2$-$C_{12}$-Alkenyl kann insbesondere Allyl sein. $R'_2$ als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R_5$ als $C_1$-$C_{10}$-Alkylen ist insbesondere $C_2$-$C_4$-Alkylen. $R_6$ als Alkyl ist insbesondere $C_4$-$C_{12}$-Alkyl, wie z.B. Butyl, Hexyl, Octyl, Decyl oder Dodecyl. $R_6$ als Alkylphenyl ist insbesondere Tolyl. $R_6$ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, 7-tert-Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester, sowie Butandiol-1,4- oder Thiodiglycolaceteessigester oder Tris-acetylacetoxyethylenisocyanurat und Dehydracetsäure. Weitere Beispiele sind die Zink-, Calcium-, Magnesium-, Barium- und Aluminiumsalze bzw. Komplexe der erwähnten beta-Ketoester und beta-Diketone, sowie der Acetessig- und Benzoylessigsäure

Bevorzugt sind 1,3-Diketoverbindungen der obigen Formel, worin $R'_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R'_2$ Wasserstoff ist und $R'_3$ eine der für $R'_1$ gegebenen Bedeutungen hat.

Die 1,3-Diketoverbindungen können in Mengen von beispielsweise 0,01 bis 10, zweckmäßig 0,01 bis 3 und insbesondere 0,01 bis 2 Gew.-Teilen, bezogen auf 100 Gew.-Teile PVC, angewandt werden. In besonderen Fällen können auch Mengen bis zu 20 Gewichtsteilen zweckmäßig sein.

Als Antioxidantien kommen beispielsweise in Betracht:

1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tertbutyl-4-hydroxyanisol, 3,5-Di-tert-butyl-4-hydroxyphenyl-stearat, Bis(3,5-di-tert-butyl-4-hydroxyphenyl)adipat.

4. Tocopherole, z.B. α-Tocopherol, β-Tocopherol, γ-Tocopherol, δ-Tocopherol und Mischungen davon (Vitamin E).

5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis-(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methylcaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl] -2,2-bis(3,5-di-tert-butyl-4-hydroxybenzyl)-malonat.

9. Hydroxybenzyl-Aromaten, z.B. 1,3,5-Tris(3,5-di-tert-butyl-4-hydroxybenzyl)-2,4,6-tri-methylbenzol, 1,4-Bis (3,5-di-tert-butyl-4-hydroxybenzyl)-2,3,5,6-tetramethylbenzol, 2,4,6-Tris(3,5-di-tert-butyl-4-hydroxybenzyl)-phenol.

10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-diethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

11. Benzylphosphonate, z.B. Dimethyl-2,5-di-tert-butyl-4-hydroxybenzylphosphonat, Diethyl-3,5-di-tert-butyl-4-hydroxybenzylphosphonat Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

13. Ester der β-35-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

15. Ester der β-(3,5-Dicyclohexyl-4-hdroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

17. Amide der β-(3,5-Di-tert-butyl-4-hdroxyphenyl)-propionsäure, wie z.B. N,N'-Bis-(3,5-di-tert-butyl-4-hydroxyphenylpropionyl)-hexamethylendiamin, N,N'-Bis(3,5-di-tert-butyl-4-hydroxyphenylpropionyl)-trimethylendiarnin, N,N'-Bis(3,5-di-tert-butyl-4-hydroxyphenylpropionyl)-hydrazin.

18. Ascorbinsäure (Vitamin C).

19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis-(1 -ethyl-3-methyl-pentyl)-p-phenylendiamin, N,N'-Bis (1-methyl-heptyl)-p-phenylendiamin, N,N'-Dicyclohexyl-p-phenylendiamin, N,N'-Diphenyl-p-phenylendiamin, N, N'-Di-(naphthyl-2)-p-phenylendiamin, N-Isopropyl-N'-phenyl-p-phenylendiamin, N-(1,3-Di-methyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenyl Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4' -Diaminodiphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

Gegebenenfalls kann auch ein Gemisch von Antioxidantien unterschiedlicher Struktur eingesetzt werden.

Die Antioxidantien können in Mengen von beispielsweise 0,01 bis 10, zweckmäßig 0,1 bis 10 und insbesondere 0,1 bis 5 Gew.-Teilen, bezogen auf 100 Gew.-Teile PVC, angewandt werden.

Als UV-Absorber und Lichtschutzmittel kommen beispielsweise in Betracht:

1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300;

$$[R-CH_2CH_2-COO(CH_2)_3]_2-$$

mit R = 3'-tert-Butyl-4'-hydroxy-5'-2H-benzotriazol-2-yl-phenyl.

2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

4. Acrylate, wie z.B. α-Cyan-β,β-diphenylacrylsäure-ethylester bzw. -isooctylester, α-Carbomethoxy-zimtsäure-methylester, α-Cyano-β-methyl-p-methoxy-zimtsäuremethyl-ester bzw. -butylester, α-Carbomethoxy-p-methoxy-zimtsäure-methylester, N-(β-Carbomethoxy-β-cyanovinyl)-2-methyl-indolin.

5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

6. Sterisch gehinderte Amine, wie z.B. Bis(2,2,6,6-tetramethyl-piperidin4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2, 6,6-tetramethylpiperidyl)-sebacat, Bis(1-octyloxy-2,2,6,6-tetramethylpiperidyl)-succinat, Kondensationsprodukt aus N,N'-Bis (2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2'4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3, 8-diaza-4-oxospiro[4,5]decan und Epichlorhydrin.

7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5 -triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxypropyloxy)phenyl]-4'6-bis(2'4-dimethylphenyl)-1,3,5-triazin, 2-[4-(dodecyloxy/tridecyloxy-2-hydroxypropoxy)-2-hydroxy-phenyl]-4,6-bis(2'4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

Ferner kommen als weitere Zusätze in Betracht:
Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloylthiodipropionsäure-dihydrazid.
Phosphite und Phosphonite,
Es kommen organische Phosphite der allgemeinen Formel $P(OR)_3$ in Betracht, wobei die Reste R gleiche oder verschiedene Alkyl-, Alkenyl-, Aryl- oder Aralkyl-Reste bedeuten. Bevorzugte organische Phosphite sind solche der Formeln

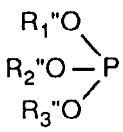

und

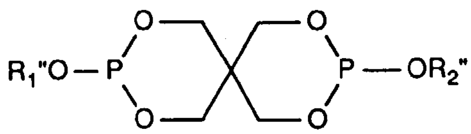

worin $R_1$", $R_2$" und $R_3$" gleich oder verschieden sind und $C_6$-$C_{18}$-Alkyl, $C_6$-$C_{18}$-Alkenyl, einen substituierten oder unsubstituierten Phenylrest oder $C_5$-$C_7$-Cycloalkyl bedeuten.

Bedeuten $R_1$", $R_2$" und $R_3$" $C_6$-$C_{18}$-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten $R_1$", $R_2$" und $R_3$" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyl-dipropylenglycolphosphite, Tetraalkyl(Bisphenol-A)Phosphite, Phenyldidecylphosphit, (2,4-Di-tert-butylphenyl)-di-dodecylphosphit, (2,6-Di-tert-butylphenyl)-di-dodecylphosphit und die Dialkyl-und Diaryl-pentaerythrit-diphosphite, wie Distearylpentaerythrit-diphosphit, sowie nichtstöchiometrische Triarylphosphite. z.B. der Zusammensetzung $(H_{19}C_9\text{-}C_6H_4)O_{1,5}P(OC_{12/13}H_{25/27})_{1,5}$. Beispiele für Phosphite sind Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tertbutyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,1 0-tetra-tert-butyl- 12H-dibenz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4-di-tert-butyl-6-methylphenyl)-methylphosphit, Bis-(2,4-di-tert-butyl-6-methylphenyl)-ethyl Bevorzugte organische Phosphite sind Distearyl-pentaerythrit-diphosphit, Trisnonylphenylphosphit und Phenyl-didecyl-phosphit.
Die organischen Phosphite können in Mengen von beispielsweise 0,01 bis 10, zweckmäßig 0,05 bis 5 und insbesondere 0,1 bis 3 Gew.-Teilen, bezogen auf 100 Gew.-Teile PVC, angewandt werden.
Hydroxylamine wie z.B. N,N-Dibenzylhydroxylamin, N,N-diethylhydroxylamin, N,N-Di-octylhydroxylamin, N,N-Dilaurylhydroxylamin, N,N-Ditetradecylhydroxylamin, N,N-Di-hexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
Thiosynergisten wie z.B. Thiodipropionsäure-di-laurylester oder Thiodipropionsäure-distearylester.
Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
Polyamidstabilisatoren, wie z.B. Kupfersalze in Kombination mit Jodiden und/oder Phosphorverbindungen und Salze des zweiwertigen Mangans.
Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Antimonbrenzcatechinat oder Zinnbrenzcatechinat.
Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. Diphenylessigsäure, Natriumsuccinat oder Natriumbenzoat; polymere Verbindungen wie z.B. ionische Copolymerisate ("Ionomere").
Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.
Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy) phenyl]-benzofuran-2-on, 3,3'-Bis[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.
Sonstige Zusätze, wie z.B. Gleitmittel, Emulgatoren, Pigmente, Rheologieadditive, Katalysatoren, Verlaufshilfsmittel, Optische Aufheller, Flammschutzmittel, Antistatika, Treibmittel.

Als Gleitmittel kommen beispielsweise in Betracht: Höhere Fettsäuren bzw. deren Alkali- und Erdalkalisalze sowie Montanwachs, Fettsäureester, Komplexester, PE-Wachse, Amidwachse, Paraffine, Glycerinester oder Fettketone. Verwendbare Gleitmittel sind auch in "Plastics Additives", Herausgeber R. Gächter und H. Müller, Hanser Verlag, 3. Auflage, 1990, Kap. 6, Seiten 423-480 sowie in "Kunststoff Handbuch PVC" 2/1, 20. Aufl. 1986, S. 570-595, beschrieben.

Als weitere metallfreie Stabilisatoren kommen beispielsweise β-Naphthol, Hydroxydiphenylamin, α-Phenylindol, β-Aminocrotonate und Pyrrole, wie z.B. in EP-A-465405 beschrieben, in Betracht.

Als Polyole kommen beispielsweise in Betracht:
Pentaerythrit, Dipentaerythrit, Tripentaerythrit, Bistrimethylolpropan, Bistrimethylolethan, Trismethylolpropan, Sorbit, Maltit, Isomaltit, Lactit, Lycasin, Mannit, Lactose, Leucrose, Tris-(hydroxyethyl)-isocyanurat, Palatinit, Tetramethylolcyclohexanol, Tetramethylolcyclopentanol, Tetramethylolcyclopyranol, Glycerin, Diglycerin, Polyglycerin oder 1-0-α-D-Glycopyranosyl-D-mannit-dihydrat. Bevorzugt sind davon die Disaccharidalkohole.

Die Polyole können in Mengen von beispielsweise 0,01 bis 20, zweckmäßig 0,1 bis 20 und insbesondere 0,1 bis 10 Gew.-Teilen, bezogen auf 100 Gew.-Teile PVC, angewandt werden.

Als Verbindungen aus der Reihe der Hydrotalcite kommen sowohl die natürlich vorkommenden Mineralien als auch synthetisch hergestellte Verbindungen in Betracht. Die zusätzliche Verwendung von Hydrotalciten in den erfindungsgemäßen Zusammensetzungen ist bevorzugt, da diese Verbindungen die Stabilisierung synergistisch verstärken können.

Verbindungen aus der Reihe der Hydrotalcite können durch die allgemeine Formel I,

$$M^{2+}{}_{1-x}\cdot M^{3+}{}_{x}\cdot(OH)_2\cdot(A^{n-})_{x/n}\cdot mH_2O \qquad (I)$$

beschrieben werden,
wobei

- $M^{2+}$ = Mg, Ca, Sr, Zn, Sn und/oder Ni ist,
- $M^{3+}$ = Al, B oder Bi ist,
- $A^{n}$ ein Anion mit der Valenz n darstellt,
- n eine Zahl von 1-4 ist,
- x eine Zahl von 0-0,5 ist,
- m eine Zahl von 0-2 ist.

Bevorzugt ist

$A^n$ = $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

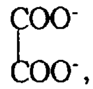

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt; weitere Beispiele finden sich in DE 41 06 403.

Andere Hydrotalcite, die zweckmäßig eingesetzt werden können, sind Verbindungen mit der allgemeinen Formel Ia,

$$M_x^{2+}Al_2(OH)_{2x+6nz}(A^{n-})_2 \cdot mH_2O \qquad (Ia)$$

wobei in vorliegender Formel Ia $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

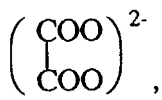

$OH^-$ und $S^{2-}$ darstellt, wobei n die Valenz des Anions ist, m eine positive Zahl, vorzugsweise von 0,5 bis 5, darstellt und x und z positive zahlen darstellen, wobei x vorzugsweise 2 bis 6 ist und z kleiner als 2 ist.

Bevorzugt sind Verbindungen aus der Reihe der Hydrotalcite der allgemeinen Formel I,

$$M^{2+}{}_{1-x} \cdot M^{3+}{}_x \cdot (OH)_2 \cdot (A^{n-})_{x/n} \cdot mH_2O \qquad (I)$$

wobei $M^{2+}$ die Bedeutung von Mg oder einer festen Lösung von Mg und Zn hat, $A^{n-}$ für $CO_3^{2-}$ steht, x eine Zahl von 0 bis 0,5 ist und m eine Zahl von 0 bis 2 ist.

Ganz besonders bevorzugt sind Hydrotalcite der Formeln

$$Al_2O_3 \cdot 6MgO \cdot CO_2 \cdot 12H_2O,$$

$$Mg_{4,5}Al_2(OH)_{13} \cdot CO_3 \cdot 3,5H_2O,$$

$$4MgO \cdot Al_2O_3 \cdot CO_2 \cdot 9H_2O,$$

$$4MgO \cdot Al_2O_3 \cdot CO_2 \cdot 6H_2O,$$

$$ZnO \cdot 3MgO \cdot Al_2O_3 \cdot CO_2 \cdot 8\text{-}9H_2O \text{ oder}$$

$$ZnO \cdot 3MgO \cdot Al_2O_3 \cdot CO_2 \cdot 5\text{-}6H_2O.$$

Die Hydrotalcite können in Mengen von beispielsweise 0,1 bis 20, zweckmäßig 0,1 bis 10 und insbesondere 0,1 bis 5 Gew.-Teilen, bezogen auf 100 Gew.-Teile PVC, angewandt werden.

Dawsonite können ebenfalls und in gleichen Mengen wie die Zeolithe dem PVC zugesetzt werden. Es handelt sich dabei um Alumocarbonate der Formel Na-(oder K- oder Li)$[AL(OH)_2CO_3]\cdot n\ H_2O$

Kenyaite, Kanemite und Magadiite kommen ebenfalls in Betracht,

z.B. ein Magadiit der Formel $Na_2Si_{14}O_{29}\cdot n\ H_2O$ oder $Na_2Si_8O_{17}\cdot n\ H_2O$, worin n eine Zahl 0-30 ist;

oder ein Kenyait der Formel $Na_2Si_{22}O_{45}\cdot n\ H_2O$, worin n eine Zahl 0-30 ist;

oder ein Kanemit der Formel $Na_2Si_2O_5\cdot n\ H_2O$, $NaHSi_2O_5\cdot n\ H_2O$ oder $Na_2Si_4O_9\cdot n\ H_2O$, worin n eine Zahl 0-30 ist;

Die verwendbaren Magadiite, Kenyaite oder Kanemite können natürlich vorkommende Mineralien sein oder synthetisch hergestellte Verbindungen. Verfahren zur Herstellung solcher Verbindungen finden sich beispielsweise in EP 0 472 144, EP 0 615 955, EP 0 615 956, EP 0 627 383 und DE 41 07 955.

Auch Mischungen der genannten anorganischen Costabilisatoren können mit Vorteil eingesetzt werden. Es können auch geringfügige synthesebedingte Anteile weiterer Zeolithe (um 10%), z.B. Zeolith A oder Clinoptilolith, ohne den Kern der Erfindung zu verändern, vorhanden sein.

Bevorzugt sind Polymerzusammensetzungen enthaltend

(a) PVC oder dessen Recyclat,
(b) mindestens einen Zeolith des P-Typs,
(c) mindestens eine organische Zink-Verbindung, und/oder
(d) mindestens eine Organozinnverbindung der oben beschriebenen Formeln I bis VII. Besonders bevorzugt sind Polymerzusammensetzungen enthaltend als Komponente (b) Zeolith MAP.

Bevorzugt ist ferner ein stabilisiertes PVC-haltiges Polymer, das zusätzlich ein Epoxid und/oder eine organische Calciumverbindung und/oder ein beta-Diketon bzw einen beta-Ketoester enthält.

Weiterhin ist stabilisiertes PVC-haltiges Polymer bevorzugt, das zusätzlich ein phenolisches Antioxidans enthält. Sämtliche Kombinationen können zusätzlich Gleitmittel enthalten.

Ein weiterer Gegenstand der vorliegenden Erfindung ist eine Stabilisatormischung enthaltend die anfangs beschriebenen Komponenten (b), (c) und/oder (d).

Für die einzelnen Mischungsbestandteile gelten die vorstehend erläuterten Bevorzugungen, ebenso kann die Stabilisatormischung die oben beschriebenen weiteren Bestandteile enthalten.

Die Stabilisatormischung kann auch zusammen mit konventionellen Zusätzen vor der eigentlichen Verwendung formgebend zu beispielsweise Granulat oder Extrudat oder einer Paste verarbeitet werden.

Ein weiterer Gegenstand der vorliegenden Erfindung ist die Verwendung der soeben beschriebenen Stabilisatormischung - auch als Granulat, Extrudat oder Paste auch in Verbindung mit Gleitmitteln (sog. *one-pack)* - zur Stabilisierung eines halogenhaltigen Polymers oder Polymer-Recyclates. Für die einzelnen Stabilisatoren sowie das halogenhaltige Polymer selbst gelten die vorstehend erläuterten Bevorzugungen, ebenso kann zusätzlich einer der oben beschriebenen weiteren Bestandteile verwandt werden.

Die erfindungsgemäßen Polymerzusammensetzungen kann auf bekannte Weise hergestellt werden, wozu man unter Verwendung bekannter Vorrichtungen wie Mischern, Knetern, Extrudern, Mühlen und dergleichen, die genannten Stabilisatoren und gegegbenenfalls weitere Zusätze mit dem halogenhaltigen Polymer vermischt. Hierbei können die Stabilisatoren einzeln oder in Mischung zugegeben werden oder auch in Form sogenannter Masterbatches. Die Erfindung betrifft somit auch ein Verfahren zur Herstellung von stabilisiertem halogenhaltigen Polymer, dadurch gekennzeichnet, daß man unter Verwendung von Vorrichtungen, wie Kalandern, Mischern, Knetern, Extrudern und dergleichen, die Komponenten (b), (c) und/oder (d) gemäß Anspruch 1 und gegebenenfalls weitere Zusätze mit dem PVC vermischt.

Die nach vorliegender Erfindung stabilisierten Polymerzusammensetzungen können auf bekannte Weisen in die gewünschte Form gebracht werden. Solche Verfahren sind beispielsweise Kalandrieren, Extrudieren, Spritzgießen, Sintern oder Spinnen, ferner Extrusions-Blasen oder eine Verarbeitung nach dem Plastisol-Verfahren. Die Polymerzusammensetzungen können auch zu Schaumstoffen verarbeitet werden.

Die Erfindung betrifft auch die Verwendung der stabilisierten Polymerzusammensetzungen zur Herstellung von aus halogenhaltigem Polymer herstellbaren Formkörpern. Die erfindungsgemäßen Polymerzusammensetzungen eignen sich für Halbhart- und Weich-Rezepturen, insbesondere in Form von Weichrezepturen für Drahtummantelungen, Kabelisolierungen, welche besonders bevorzugt sind. In Form von Halbhart-Rezepturen eignen sich die erfindungsgemäßen Polymerzusammensetzungen besonders für Dekorationsfolien, Schaumstoffe, Agrarfolien, Schläuche, Dichtungsprofile, Bürofolien, extrudierte Profile und Platten, Fußbodenfolien und Platten, Streichwaren und Kunstleder sowie Crashpad Folien (Automobile).

In Form von Hart-Rezepturen eignen sich die erfindungsgemäßen Polymerzusammensetzungen besonders für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, und Apparatur-Gehäuse (Computer, Haushaltsgeräte) sowie andere Spritzgußartikel.

Beispiele für die Anwendung der erfindungsgemäß stablisierten Polymerzusammenetzungen als Plastisol sind Kunstleder, Fussböden, Textilbeschichtungen, Tapeten, Coil-Coatings und Unterbodenschutz für Kraftfahrzeuge.

Beispiele für Sinter-Anwendungen der erfindungsgemäß stabilisierten Polymerzusammensetzungen sind Slush, Slush Mould und Coil-Coatings.

Bevorzugt sind ferner Polymerzusammensetzungen, enthaltend zusätzlich Stoffe ausgewählt aus der Gruppe der Verstärkungsmittel, Antioxidantien, Polyole, Hydrotalcite, Dawsonite, organischen Phosphite, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, Naphthole, Hydroxydiphenylamine, Disaccharidalkohole, Phenylindole, Phosphate, Thiophosphate, Gelierhilfen, peroxidzerstörenden Verbindungen, Modifikatoren und weiteren Komplexbildner für Lewis-Säuren.

Besondes bevorzugt sind ferner Polymerzusammensetzungen, enthaltend zusätzlich ein phenolisches Antioxidans.

Besonders bevorzugt sind ferner Polymerzusammensetzungen, enthaltend zusätzlich Füllstoffe, insbesondere Kreide.

Bevorzugt sind ferner Polymerzusammensetzungen, enthaltend zusätzlich mindestens ein Additiv aus der Gruppe der Disaccharidalkohole, organischen Phosphite, Zeolithe, Hydrotalcite, Dawsonite, Aminocrotonate, Polyole, Diketone, Pyrrole, β-Naphthol oder der mono-, oligo- oder polymeren Dihydropyridine.

Bevorzugt sind ferner Polymerzusammensetzungen, enthaltend zusätzlich mindestens ein Additiv aus der Gruppe der organischen Phosphite, Dawsonite und Hydrotalcite.

Bevorzugt sind ferner Polymerzusammensetzungen, enthaltend zusätzlich ein sterisch gehindertes Amin, insbesondere 0,01-5 Teile je 100 Teile PVC.

Die folgenden Beispiele erläutern die Erfindung weiter, ohne sie darauf zu beschränken. Teile und Prozente beziehen sich, wie auch in der übrigen Beschreibung, auf das Gewicht, sofern nicht anders angegeben. Der Yellowness-Index (YI) wird analog ASTM D 1925-70 und das Transparenzverhalten (Kontrastverhältnis KV) analog ASTM 2805-70 bzw. 589-65 bestimmt

Beispiele:

Dauerwalztest

Die PVC Mischung wird bei einer Temperatur von 180°C auf einem Walzwerk mit Spaltbreite 0,5mm gewalzt, und alle 5 Minuten wird eine Probe entnommen, deren Yellowness Index (**YI**) nach Erkalten gemessen wird.

Aus der folgenden Tabelle I ist die Stabilisatorwirkung von Zeolith P ersichtlich.

## Tabelle I

## Dauerwalztest

| Mischung | Beispiel | 7 | 8 |
|---|---|---|---|
| PVC K-Wert 71[1] | | 100 | 100 |
| Dioctylphthalat | | 18 | 18 |
| epox. Soja-Öl | | 2 | 2 |
| Calciumstearat | | 0,2 | 0,2 |
| Zinkstearat | | 0,85 | 0,85 |
| Irganox® 1076[2] | | 0,10 | 0,1 |
| Zeolith P[4] | - | - | 0,9 |
| **YI nach 30 min** | | **>>40** | **32** |

[1] Evipol SH 7020 (S-PVC, K-Wert 71) [2] Octadecyl-3-(3,5-di-tert-butyl-4-hydroxyphenyl)propionat

[4] Muster ex Degussa, Zusammensetzung $Na_2O \cdot Al_2O_3 \cdot 2\ SiO_2 \cdot 3\ H_2O$

| Netzebenenabstände: | d-Wert | Intensität |
|---|---|---|
| | 12.4 | sehr schwach |
| | 8.7 | sehr schwach |
| | 7.1 | sehr stark |
| | 5.02 | stark |
| | 4.09 | stark |
| | 3.7 | sehr schwach |
| | 3.34 | sehr schwach |
| | 3.28 | sehr schwach |
| | 3.20 | stark |
| | 3.17 | sehr stark |
| | 2.97 | sehr schwach |
| | 2.90 | mittel |
| | 2.69 | stark |
| | 2.61 | sehr schwach |
| | 2.36 | schwach |
| | 1.96 | mittel |
| | 1.78 | schwach |
| | 1.72 | schwach |

Eine PVC-Zusammensetzung wird durch Vermischen der einzelnen Komponenten gemäß nachfolgenden Tabellen hergestellt (Mengenangaben in Gew.-Teilen).
Die Bestandteile werden während 5 Minuten auf einem Mischwalzwerk bei 170-190°C homogenisiert und zu einem 0,1-0,5 mm dicken Film ausgewalzt.

Die Stabilität der Proben wird mit folgendem Test bestimmt: Die PVC Mischung wird bei einer Temperatur von 180°C auf einem Walzwerk mit Spaltbreite 0,3 mm gewalzt.

Preßplatte

Mehrere so homogenisierte Walzfelle werden 3 Minuten lang bei 180° zu einer 2 mm starken Preßplatte gepreßt, deren Yellowness Index nach Erkalten gemessen wird (Tabelle II).

Tabelle II

| **Yellowness Index Preßplatte** | | | |
|---|---|---|---|
| Mischung | Beispiel | **1** | **2** |
| PVC K-Wert 71[1)] | | 100 | 100 |
| Dioctylphthalat | | 18 | 18 |
| epox. Soja-Öl | | 2 | 2 |
| Calciumstearat | | 0,2 | 0,2 |
| Zinkstearat | | 0,85 | 0,85 |
| Irganox® 1076[2)] | | 0,10 | 0,1 |
| Wessalith® P[3)] | | 1,5 | - |
| Zeolith P[4)] | | - | 1,5 |
| **YI der Preßplatte** | | **63,5** | **57,2** |

1)Evipol SH 7020 (S-PVC, K-Wert 71)
2)Octadecyl-3-(3,5-di-tert-butyl-4-hydroxyphenyl)propionat
3)4A-Zeolith der Firma Degussa,Na-Form
4)wie beschrieben, Muster ex Degussa

Aus dem Beispiel ist die verbesserte Stabilisatorwirkung von Zeolith P im Vergleich zu Wessalith P ersichtlich.

Statischer Hitzetest

Die Bestimmung der Langzeitstabilität erfolgt durch einen statischen Hitztest ("stat.H.") nach DIN 53381, wobei das Probestück bei 190°C in einem Testofen gelagert wird und der Yellowness Index nach einer bestimmten Zeit bestimmt wird. Geringere Yellowness Indices bedeuten bessere Stabilisierung

Ergebnisse:

Tabelle III

| **Statischer Hitzetest,** Dicke 0,4 mm | | | |
|---|---|---|---|
| Mischung | Beispiel | **3** | **4** |
| PVCK-Wert 71[1)] | | 100 | 100 |
| Dioctylphthalat | | 18 | 18 |
| epox. Soja-Öl | | 2 | 2 |
| Calciumstearat | | 0,2 | 0,2 |
| Zinkstearat | | 0,85 | 0,85 |
| Irganox® 1076[2)] | | 0,10 | 0,1 |
| Wessalith® P[3)] | | 0,9 | - |
| Zeolith P[4)] | - | - | 0,9 |
| **YI nach 10 min** | | **17,1** | **16** |

1)Evipol SH 7020 (S-PVC, K-Wert 71)
2)Octadecyl-3-(3,5-di-tert-butyl-4-hydroxyphenyl)propionat
3)4A-Zeolith der Firma Degussa, Na-Form
4)wie beschrieben, ex Degussa

Tabelle III (fortgesetzt)

| **Statischer Hitzetest,** Dicke 0,4 mm | | | |
|---|---|---|---|
| Mischung | Beispiel | **3** | **4** |
| **YI nach 15 min** | | **24,1** | **22.1** |
| **YI nach 20 min** | | **32,6** | **24.8** |
| **YI nach 25 min** | | **35** | **25,8** |

Aus dem Beispiel ist die verbesserte Stabilisatorwirkung von Zeolith P im Vergleich zu Wessalith P ersichtlich.

Tabelle IV

| **Statischer Hitzetest, wie oben beschrieben** | | | |
|---|---|---|---|
| Mischung | Beispiel | **5** | **6** |
| PVC K-Wert 71[1)] | | 100 | 100 |
| Dioctylphthalat | | 18 | 18 |
| epox. Soja-Öl | | 2 | 2 |
| Calciumstearat | | 0,2 | 0,2 |
| Zinkstearat | | 0,85 | 0,85 |
| Irganox® 1076[2)] | | 0,10 | 0,1 |
| Wessalith® P[3)] | | 1,5 | |
| Zeolith P[4)] | - | - | 1,5 |
| **YI nach 10 min** | | **31,5** | **21.6** |
| **YI nach 15 min** | | **42,8** | **27.2** |
| **YI nach 20 min** | | **51,8** | **31.7** |

1)Evipol SH 7020 (S-PVC, K-Wert 71)
2)Octadecyl-3-(3,5-di-tert-butyl-4-hydroxyphenyl)propionat
3)4A-Zeolith der Firma Degussa, Na-Form
4)wie beschrieben, ex Degussa

Aus dem Beispiel ist die verbesserte Stabilisatorwirkung von Zeolith P im Vergleich zu Wessalith P ersichtlich.

**Patentansprüche**

**1.** Zusammensetzungen enthaltend

(a) ein halogenhaltiges Polymer oder dessen Recyclat;
(b) mindestens einen Zeolith in der Alkali-Form mit Ausnahme von Zeolith A, $Na_{12}Al_{12}Si_{12}O_{48}\cdot 27\ H_2O$ und Clinoptilolith $Na_6Al_6Si_{30}O_{72}\cdot 2\ H_2O$,
(c) mindestens eine organische Zink-, Aluminium- oder Seltenerd-Verbindung, und/oder
(d) mindestens eine Organozinnverbindung einer der Formeln I bis VII

$$[R^1]_iSn[-Q-R^2]_{4-i} \quad (I)$$

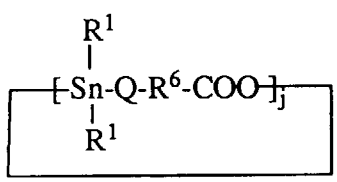

(II)

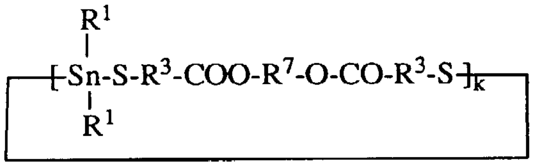

(III)

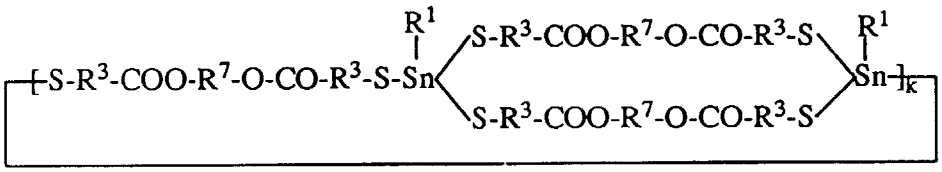

(IV)

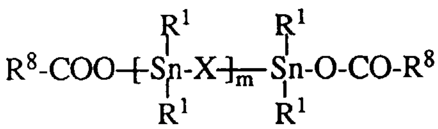 ,

(V)

$R_pSnS_q$ (VI) bzw. $[R_pSnS_q]_r$ (VII)

worin

R und
$R^1$ unabhängig voneinander $C_1$-$C_{12}$-Alkyl oder $C_3$-$C_{11}$-Alkoxycarbonylethyl bedeuten,
Q die Bedeutung von -S- oder -O-CO- hat und,
$R^2$, wenn Q für -S- steht, $C_8$-$C_{18}$-Alkyl oder ein Rest -$R^3$-COO-$R^4$ oder -$R^3$-O-CO-$R^4$ ist,
$R^2$, wenn Q für -O-CO- steht, $C_1$-$C_{18}$-Alkyl, $C_2$-$C_{18}$-Alkenyl, Phenyl, durch $C_1$-$C_4$-Alkyl substituiertes Phenyl, oder ein Rest -CH=CH-COO-$R^5$ ist,
$R^3$ Methylen, Ethylen oder o-Phenylen,
$R^4$ $C_5$-$C_{18}$-Alkyl,
$R^5$ $C_1$-$C_{18}$-Alkyl, $C_5$-$C_7$-Cycloalkyl oder Benzyl bedeuten,
$R^6$, wenn Q für -S- steht, Methylen, Ethylen oder o-Phenylen,
$R^6$, wenn Q für -O-CO- steht, $C_1$-$C_8$-Alkylen, o-Phenylen oder eine Gruppe -CH=CH- bedeutet,
$R^7$ $C_2$-$C_4$-Alkylen oder durch -O- unterbrochenes $C_4$-$C_8$-Alkylen darstellt,
$R^8$ $C_1$-$C_{18}$-Alkyl, $C_2$-$C_{18}$-Alkenyl, Phenyl, durch $C_1$-$C_4$-Alkyl substituiertes Phenyl, oder ein Rest -CH=CH-COO-$R^5$ ist,
X unabhängig voneinander - die Bedeutung -O- oder -O-CO-$R^9$-COO- hat,
$R^9$ $C_1$-$C_8$-Alkylen, o-Phenylen oder eine Gruppe -CH=CH- bedeutet,
p 1 oder 2, q [(4-p)/2] und r > 1 sind,
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen,

**2.** Zusammensetzungen gemäß Anspruch **1**, enthaltend als Komponente (a) PVC oder dessen Recyclat.

**3.** Zusammensetzungen gemäß Anspruch **1**, enthaltend als Komponente (a) PVC oder dessen Recyclat und als Komponente (c) 0,001-5,0 Teile je 100 Teile PVC einer organischen Zink-Verbindung.

**4.** Zusammensetzungen gemäß Anspruch 1, enthaltend als Komponente (b) mindestens einen Zeolith in der Natrium-, Kalium- und/oder Lithium-Form
ausgenommen Zeolith A, $Na_{12}Al_{12}Si_{12}O_{48} \cdot 27\ H_2O$ und
Clinoptilolith $Na_6Al_6Si_{30}O_{72} \cdot 2\ H_2O$.

**5.** Zusammensetzungen gemäß Anspruch 1, enthaltend als Komponente

(b) mindestens einen Zeolith der Formel

$$M_2O \cdot Al_2O_3 \cdot x\, SiO_2 \cdot y\, H_2O \quad (I),$$

worin M Na, K oder Li, x 2 bis 12 und y 1 bis 15 sind,
ausgenommen Zeolith A, $Na_{12}Al_{12}Si_{12}O_{48} \cdot 27\ H_2O$ und
Clinoptilolith $Na_6Al_6Si_{30}O_{72} \cdot 2\ H_2O$.

**6.** Zusammensetzungen gemäß Anspruch **1**, enthaltend als Komponente
(b) einen Zeolith der Formel I nach Anspruch **4** mit Porendurchmesser von 3 bis 9 Å.

**7.** Zusammensetzungen gemäß Anspruch **1**, enthaltend als Komponente
(b) einen Zeolith der Formel I mit blättrigem oder würfelförmigem Kristallhabitus.

**8.** Zusammensetzungen gemäß Anspruch **1**, wobei in Komponente (b) M Na oder K ist, x 1 bis 10 und y 2 bis 12 sind .

**9.** Zusammensetzungen gemäß Anspruch **1**, wobei die Komponente (b) Zeolith P ist, d.h. in Formel I stehen M für Na, x für 1 bis 5 und y für 3,5 bis 6.

**10.** Zusammensetzungen gemäß Anspruch **1**, enthaltend zusätzlich ein Epoxid.

**11.** Zusammensetzungen gemäß Anspruch **1**, enthaltend zusätzlich eine organische Calciumverbindung.

**12.** Zusammensetzungen gemäß Anspruch **1**, enthaltend zusätzlich ein phenolisches Antioxidans.

**13.** Stabilisatormischung enthaltend die in Anspruch **1** beschriebenen Komponenten (b), (c) und/oder (d)

**14.** Verwendung einer Stabilisatormischung gemäß Anspruch **13**, zur Stabilisierung eines halogenhaltigen Polymers oder Polymer-Recyclates.

**15.** Verfahren zur Herstellung von stabilisiertem halogenhaltigen Polymer oder Polymer-Recyclat, dadurch gekennzeichnet, dass man unter Verwendung von Vorrichtungen, wie Kalander, Mischer, Kneter, Extruder und dergleichen, eine Stabilisatormischung gemäß Anspruch **13** als solche oder in Form ihrer einzelnen Bestandteile mit einem halogenhaltigen Polymer vermischt.

**16.** Zusammensetzungen gemäß Anspruch **1**, enthaltend zusätzlich Stoffe ausgewählt aus der Gruppe der Füllstoffe und Verstärkungsmittel, Antioxidantien, Polyole, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, Naphthole, Hydroxydiphenylamine, Disaccharidalkohole, Phenylindole, Phosphate, Thiophosphate, Gelierhilfen, peroxidzerstörenden Verbindungen, Modifikatoren und weiteren Komplexbildner für Lewis-Säuren.

**17.** Verwendung des stabilisierten halogenhaltigen Polymers gemäß Anspruch 1 zur Herstellung von aus halogenhaltigem Polymer herstellbaren Formkörpern.

**18.** Verwendung gemäß Anspruch **17** zur Herstellung von Drahtummantelungen, Kabelisolierungen, Dekorationsfolien, Schaumstoffen, Agrarfolien, Schläuchen, Dichtungsprofilen, Bürofolien, extrudierten Profilen und Platten, Fußbodenfolien und Platten, Streichwaren oder Kunstleder.

Europäisches Patentamt

# EUROPÄISCHER RECHERCHENBERICHT

Nummer der Anmeldung
EP 96 81 0420

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 658 594 (CIBA GEIGY AG) 21.Juni 1995<br>* Seite 8 - Seite 9; Tabellen 1,2 *<br>* Ansprüche 1-6 *<br>--- | 1-18 | C08K13/02<br>//(C08K13/02, 3:34,5:56), (C08K13/02, 3:34,5:57), (C08K13/02, 3:34,5:56, 5:57) |
| A | EP-A-0 062 813 (HENKEL KGAA) 20.Oktober 1982<br>* Beispiele 1-3 *<br>* Ansprüche 1-3 *<br>--- | 1-18 | |
| A | DATABASE WPI<br>Section Ch, Week 8941<br>Derwent Publications Ltd., London, GB;<br>Class A14, AN 89-297874<br>XP002015335<br>& JP-A-01 221 447 (NITTO KASEI KK) ,<br>4.September 1989<br>* Zusammenfassung *<br>--- | 1-18 | |
| A | DATABASE WPI<br>Section Ch, Week 8916<br>Derwent Publications Ltd., London, GB;<br>Class A14, AN 89-119527<br>XP002015336<br>& JP-A-01 066 258 (MITSUBISHI KASEI VI) ,<br>13.März 1989<br>* Zusammenfassung *<br>----- | 1-18 | RECHERCHIERTE SACHGEBIETE (Int.Cl.6)<br>C08K |

Der vorliegende Recherchenbericht wurde für alle Patentansprüche erstellt

| Recherchenort | Abschlußdatum der Recherche | Prüfer |
|---|---|---|
| DEN HAAG | 8.Oktober 1996 | Siemens, T |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)